# EUROPÄISCHE PATENTSCHRIFT

(11) **EP 3 595 944 B1**
(45) Veröffentlichungstag und Bekanntmachung des Hinweises auf die Patenterteilung: **26.10.2022**
(21) Anmeldenummer: 18711855.9
(22) Anmeldetag: 06.03.2018
(51) Int. Cl.: B60T 7/08, G05G 1/08, G05G 5/05, G05G 5/04, G05G 1/10

(54) **DREHSCHALTER ZUM STEUERN EINER PARKBREMSVORRICHTUNG EINES FAHRZEUGS**
ROTARY SWITCH FOR CONTROLLING A PARKING BRAKE OF A VEHICLE
COMMUTATEUR ROTATIF POUR LA COMMANDE D'UN FREIN DE STATIONNEMENT D'UN VÉHICULE AUTOMOBILE

(30) Priorität: 16.03.2017 DE 102017105689
(43) Veröffentlichungstag der Anmeldung: 22.01.2020
(73) Patentinhaber: KNORR-BREMSE Systeme für Nutzfahrzeuge GmbH, 80809 München (DE)
(72) Erfinder: ZEMAN, Ferenc, 1114 Budapest (HU)
(86) Internationale Anmeldenummer: PCT/EP2018/055494
(87) Internationale Veröffentlichungsnummer: WO 2018/166845

(56) Entgegenhaltungen:
- EP-A1- 1 621 953
- EP-A2- 1 997 700
- EP-A2- 2 143 605
- WO-A1-2009/018823
- DE-A1- 19 718 679
- DE-A1-102004 008 084

## Beschreibung

Die vorliegende Erfindung betrifft einen Drehschalter zum Steuern einer elektronischen Parkbremsvorrichtung eines Fahrzeugs, insbesondere eines Nutzfahrzeugs, mit einem Drehknopf und einem Drehknopfgegenstück, wobei der Drehknopf und das Drehknopfgegenstück drehbar miteinander verbunden sind.

Im Zuge der voranschreitenden Elektrifizierung der Parkbremsvorrichtungen von Netzfahrzeugen können insbesondere im Zusammenhang mit elektronischen Parkbremsvorrichtungen alternative Betätigungsvorrichtungskonzepte Anwendung finden, da die Betätigungsvorrichtungen elektronischer Parkbremsvorrichtungen zukünftig üblicherweise elektrisch ausgebildet sein können. Somit können einerseits teure und konstruktive anspruchsvolle pneumatische Betätitungsvorrichtungen durch strukturell einfacher aufgebaute elektrische Betätitungsvorrichtungen ersetzt werden und andererseits im Hinblick auf deren Formgebungen (z.B. Drehschalter) und Wirkprinzipien größere Freiheitsgrade generiert werden.

Aus dem Stand der Technik sind bereits derartige Betätigungseinrichtungen in Form von manuell betätigbaren (Dreh-) Steuervorrichtungen bekannt, mit welchen sich der Betriebszustand einer, insbesondere elektronischen, Parkbremsvorrichtung steuern lässt.

So zeigt beispielsweise die EP 2 379 386 B1 eine Betätigungseinrichtung für eine Parkbremse eines Fahrzeugs, welches insbesondere ein Nutzfahrzeug ist, wobei die Betätigungseinrichtung eine für den Fahrbetrieb vorgesehene Betriebsbremse und die zum Feststellen des Fahrzeugs vorgesehene Parkbremse aufweist. Mittels der Parkbremse ist hierbei eine erste Bremswirkung für das Fahrzeug unabhängig von einem Bremsvorgang der Betriebsbremse erzeugbar.

Ferner offenbart die EP 1 997 700 B1 eine Betätigungseinrichtung für eine Bremsanlage eines Fahrzeugs, insbesondere eines Nutzfahrzeugs, welche ein manuell betätigbares Betätigungselement zur Betätigung der Parkbremse aufweist, das entlang einer Bewegungsbahn auslenkbar ist. Die Betätigungseinrichtung weist ferner mehrere Schaltzustände auf: In einem ersten Schaltzustand ist die Bremswirkung der Parkbremse von der Auslenkung des Betätigungselements entlang der Bewegungsbahn abhängig. In einem zweiten Schaltzustand ist die volle Bremswirkung der Parkbremse bereitstellbar.

Weitere manuell betätigbare Betätigungseinrichtungen sind beispielsweise aus der WO 2011/039556 A1, der CN 203958116 U, der EP 2 468 590 A1, der EP 2 045 157 A2, der DE 10 2006 041 009 A1, der DE 10 2008 003 379 A1, der US 7,373,855 B2, der WO 2010/078880 A1, der DE 197 51 431 A1, der DE 10 2006 036 748 A1, der EP 2 133 247 A2, der DE 199 55 797 A1 sowie EP 2 108 555 A2 bekannt.

Ferner beschreiben die Duckschriften EP 2 143 605 A2, EP 1 621 953 A1, DE 197 18 679 A1, DE 10 2004 008 084 A1 und WO 2009/018823 A1 Vorrichtungen aus diesem Bereich.

Derartige Betätigungsvorrichtungen können aufgrund der wachsenden Anzahl an zu vereinenden Funktions- und Steuerungsmöglichkeiten der elektronischen Parkbremsvorrichtung zum einen komplex aufgebaut sein und zum anderen wenig intuitiv bzw. schwierig zu bedienen sein.

Es ist daher die Aufgabe der vorliegenden Erfindung, einen Drehschalter der eingangs genannten Art in vorteilhafter Weise weiterzubilden, insbesondere dahingehend, dass eine fehlerhafte Betätigung des Drehschalters durch einen Fahrzeugführer eines Nutzfahrzeugs nahezu ausgeschlossen werden kann und dass dessen Betätigung erleichtert und intuitiver ausgebildet wird.

Diese Aufgabe wird erfindungsgemäß durch einen Drehschalter mit den Merkmalen des Anspruchs 1 gelöst. Danach ist vorgesehen, dass ein Drehschalter zum Steuern einer, insbesondere elektronischen, Parkbremsvorrichtung eines Fahrzeugs, insbesondere eines Nutzfahrzeugs, mit einem Drehknopf und einem Drehknopfgegenstück versehen ist, wobei der Drehknopf und das Drehknopfgegenstück drehbar miteinander verbunden sind und um eine gemeinsame Drehachse relativ zueinander verdrehbar sind, und wobei der Drehknopf zusätzlich entlang der gemeinsamen Drehachse bezogen auf das Drehknopfgegenstück axial verschiebbar ist, wobei der Drehschalter wenigstens einen Betätigungsschaltzustand und wenigstens einen Löseschaltzustand aufweist, wobei der Betätigungsschaltzustand aus einer ersten Drehbewegung des Drehknopfes in eine erste Drehrichtung und/oder aus einer ersten axialen Verschiebungsbewegung des Drehknopfes in eine erste Verschiebungsrichtung jeweils bezogen auf das Drehknopfgegenstück resultiert und wobei der Löseschaltzustand aus einer zweiten Drehbewegung des Drehknopfs in eine zweite Drehrichtung und/oder aus einer zweiten axialen Verschiebungsbewegung des Drehknopfes in die erste Verschiebungsrichtung jeweils bezogen auf das Drehknopfgegenstück resultiert, wobei die erste Drehrichtung der zweiten Drehrichtung entgegengesetzt ist und wobei der Betätigungsschaltzustand einem Betätigen und der Löseschaltzustand einem Lösen der Parkbremsvorrichtung zugeordnet ist.

Die Erfindung basiert auf dem Grundgedanken, die Betriebszustände, insbesondere den Löse- und Betätigungsschaltzustand, einer elektronischen Parkbremsvorrichtung eines Nutzfahrzeugs mittels einer Drehbewegung und/oder axialen Verschiebungsbewegung des Drehschalters zu steuern. Dieser kann folglich mittels einer Drehbewegung des Drehknopfs und/oder mittels dessen axialer Verschiebungsbewegung den Betätigungsschaltzustand und den Löseschaltzustand der elektronischen Parkbremsvorrichtung herbeiführen. Dadurch bietet der Drehschalter die Möglichkeit, den Betätigungsund Löseschaltzustand der elektronischen Parkbremsvorrichtung nicht nur durch eine Drehbewegung des Drehknopfs zu steuern, sondern diese zusätzlich oder alternativ durch dessen axiale Verschiebungsbewegung zu steuern. Die axiale Verschiebungsbewegung des Drehknopfs kann insbesondere als ein Eindrücken oder als ein Herausziehen des Drehknopfs in das Drehknopfgegenstück bzw. aus dem Drehknopfgegenstück ausgebildet sein. Dies bietet insbesondere den Vorteil einer größeren Variabilität in der Zuordnung von Drehknopfbewegung und des daraus resultierenden Schaltzustands. Infolgedessen kann das Betätigungsmuster individuell an unterschiedliche Rahmenbedingungen (wie z.B. Kundenwünsche, verschiedene Betätigungsmuster in unterschiedlichen Regionen der Welt) in vorteilhafter Weise angepasst werden. Daraus ergibt sich für einen Fahrzeugführer zusätzlich der Vorteil einer einfacheren und intuitiveren Betätigung des Drehschalters. Somit können Betriebsstörungen der elektronischen Parkbremsvorrichtung, beispielsweise durch fehlerhaftes Betätigen des Drehschalters durch einen Fahrzeugführer, zukünftig nahezu ausgeschlossen werden. Hierdurch erhöht sich die Betriebssicherheit sowohl der elektronischen Parkbremsvorrichtung als auch des Nutzfahrzeugs im Ganzen erheblich.

Im Übrigen kann vorgesehen sein, dass der Drehschalter wenigstens einen Trailertestschaltzustand aufweist, der einer Trailertestfunktion der Parkbremsvorrichtung zugeordnet ist. Durch das Vorsehen eines weiteren Schaltzustands, nämlich des Trailertestschaltzustands, wird eine hohe Funktionalitätsdichte des Drehschalters erreicht, sodass beispielsweise eine weitere Betätigungseinrichtung zum Steuern der Trailertestfunktion entfallen kann. Zusätzlich wird Steuerbarkeit der elektronischen Parkbremsvorrichtung durch Integration Trailertestschaltzustands in den Drehschalter für den Fahrzeugführer erleichtert und intuitiver gestaltet. Die Trailertestfunktion der elektronischen Parkbremsvorrichtung ermöglicht im Parkzustand des Nutzfahrzeugs ein vollständiges Aufheben der Bremswirkung eines Anhängerfahrzeugs, wodurch die Bremswirkung der elektronischen Parkbremsvorrichtung lediglich auf ein Zugfahrzeug ausgeübt wird. Ziel der Trailertestfunktion ist eine Sicherheitsüberprüfung, ob die Bremswirkung der elektronischen Parkbremsvorrichtung, die nur auf das Zugfahrzeug ausgeübt wird, ausreichend ist, um das gesamte Nutzfahrzeug (bestehend aus Zugfahrzeug und Anhängerfahrzeug) sicher im Stillstand bzw. im geparkten Zustand halten kann. Die Trailertestfuntion kann sich insbesondere dann als nützlich erweisen, wenn das Nutzfahrzeugen an Steigungen geparkt wird.

Weiter ist vorstellbar, dass der Drehschalter zusätzlich zum Steuern einer, insbesondere elektronischen, Betriebsbremsvorrichtung des Fahrzeugs eingerichtet ist, wobei der Drehschalter wenigstens einen Streckbremsschaltzustand aufweist, der einer Streckbremsfunktion der Betriebsbremsvorrichtung zugeordnet ist. Insbesondere im Zusammenhang mit Nutzfahrzeugen, die einen Auflieger oder ein zusätzliches Anhängerfahrzeug umfassen, ist das Vorsehen einer Streckbremsfunktion mittels der Betriebsbremsvorrichtung besonders wichtig und vorteilhaft im Sinne der Erhöhung der Funktionssicherheit des Nutzfahrzeugs. Die Bremswirkung wird bei der Streckbremsfunktion der Betriebsbremse lediglich auf das Anhängerfahrzeug ausgeübt und erfolgt graduell, d.h. gestuft. Durch diese Form der Bremskraftverteilung nur auf das Anhängerfahrzeug und nicht auf das Zugfahrzeug zieht das Anhängerfahrzeug am Zugfahrzeug (insbesondere bei einer Hangabfahrt) und streckt damit das gesamte Nutzfahrzeug. Damit wird das stabilitätsgefährdende, mögliche Einknicken des gesamten Nutzfahrzeugs bestehend aus Zugfahrzeug und mindestens einem Anhängerfahrzeug während der Bremsung durch einen manuellen Fahrereingriff verhindert. Der Steuerung der Streckbremsfunktion kann allerdings auch durch die Betriebssbremsvorrichtung automatisch übernommen werden Diese Streckbremsfunktion einem Streckbremsschaltzustand des Drehschalters zuzuordnen ist besonders deshalb vorteilhaft, weil sich einerseits die Funktionalitätsdichte des Drehschalters abermals erhöhen lässt und sich gleichzeitig durch die Möglichkeit sowohl einer Drehbewegung als auch einer axialen Verschiebungsbewegung des Drehknopfs trotz der erhöhten Funktionalitätsdichte dessen einfache und intuitive Betätigung aufrechterhalten bleiben kann.

Zudem ist denkbar, dass der Drehschalter wenigstens einen graduellen Schaltzustand aufweist, der einem graduellen Betätigen der Parkbremsvorrichtung zugeordnet ist. Mittels des graduellen Schaltzustands kann beispielsweise eine graduelle ,d.h. eine in ihrer Bremswirkung gestufte, Betätigung der elektronischen Parkbremsvorrichtung mit Wirkung auf das gesamte Nutzfahrzeug eingestellt werden. Der graduelle Schaltzustand ist jedoch nur im Fahrbetrieb des Nutzfahrzeugs einstellbar. Die graduelle bzw. stufbare Betätigung der elektronischen Parkbremsvorrichtung während des Fahrbetriebs ist zum einen gesetzlich gefordert und kann zum anderen als Hilfsbremsfunktion oder als Notbremsfunktion die Betriebsbremsvorrichtung ergänzen. Der graduelle Schaltzustand ist demnach in Abhängigkeit der aktuell vorliegenden Fahrzeugbedingungen (zum Beispiel bei einer Hangabfahrt die jeweilige Steigung) graduell durch den Fahrzeugführer einstellbar. Diese Funktionalität ebenfalls in den Drehschalter zu integrieren erhöht abermals die Funktionalitätsdichte des Drehschalters, wobei dessen einfache und intuitive Bedienbarkeit nach wie vor aufgrund der großen Variabilität der Zuordnung der Drehund axialen Verschiebungsbewegungen des Drehknopfs erhalten bleibt. Ferner ist vorstellbar, durch den graduellen Schaltzustand z.B. einen graduellen Löseschaltzustand und/oder einen graduellen Streckbremsschaltzustand einzustellen.

Außerdem ist möglich, dass der Drehschalter wenigstens einen ersten rotatorischen Anschlag, wenigstens einen zweiten rotatorischen Anschlag und wenigstens eine rotatorische Ausgangsposition aufweist, wobei der erste rotatorische Anschlag, der zweite rotatorische Anschlag sowie die rotatorische Ausgangsposition entlang eines kreisförmigen Bahnkurvenabschnitts angeordnet sind und wobei die rotatorische Ausgangsposition zwischen dem ersten und dem zweiten rotatorischen Anschlag angeordnet ist. Der erste Anschlag dient vorteilhafterweise dazu, die erste Drehbewegung des Drehknopfes in eine erste Drehrichtung radial definiert zu begrenzen. Der zweite Anschlag dient folglich dazu, die zweite Drehbewegung des Drehknopfes in eine zweite Drehrichtung radial definiert zu begrenzen. Somit ist durch die rotatorisch definierte Begrenzung der ersten und zweiten Drehbewegung der jeweilig zugeordnete Schaltzustand eindeutiger und sicherer herbeiführbar. Anhand dieser rotatorisch definierten Begrenzung wird zudem ein erleichtertes und intuitives Betätigen des Drehschalters durch den Fahrzeugführer sichergestellt.

Des Weiteren kann vorgesehen sein, dass der Drehknopf an dem ersten rotatorischen Anschlag oder an dem zweiten rotatorischen Anschlag oder an einer beliebigen DrehPosition zwischen dem erste rotatorischen und den zweiten rotatorischen Anschlag ungleich der rotatorischen Ausgangsposition mittels wenigstens eines Drehfederelements in die radiale Ausgangsposition rückstellbar ist. Das Drehfederelement stellt den Drehknopf infolge der ersten und zweiten Drehbewegung stets automatisch in die rotatorische Ausgangsposition zurück. Dadurch wird eine stabile rotatorische Ausgangsposition geschaffen, die als Referenzposition insbesondere im Hinblick auf eine einfache und intuitive Betätigung des Drehschalters durch den Fahrzeugführer besonders wichtig ist.

Der Drehschalter weist wenigstens einen ersten axialen Anschlag, wenigstens einen zweiten axialen Anschlag und wenigstens eine axiale Ausgangsposition auf, wobei der Drehknopf an dem ersten axialen Anschlag näher zu dem Drehknopfgegenstück beabstandet ist als an dem zweiten axialen Anschlag. Der erste axiale Anschlag dient vorteilhafterweise dazu, die erste axiale Verschiebungsbewegung des Drehknopfes in eine erste Verschiebungsrichtung axial definiert zu begrenzen. Der zweite axiale Anschlag dient folglich dazu, eine zweite axiale Verschiebungsbewegung des Drehknopfes in eine zweite Verschiebungsrichtung axial definiert zu begrenzen. Demzufolge ist durch die axial definierte Begrenzung der ersten Verschiebungsbewegung der jeweilig zugeordnete Schaltzustand eindeutiger und sicherer herbeiführbar. Anhand dieser axial definierten Begrenzung wird zudem ein erleichtertes und intuitives Betätigen des Drehschalters durch den Fahrzeugführer sichergestellt.

Darüber hinaus ist denkbar, dass der Drehknopf an dem ersten axialen Anschlag oder an einer beliebigen Position zwischen erstem axialen und zweitem axialen Anschlag mittels wenigstens eines Linearfederelements an den zweiten axialen Anschlag rückstellbar ist, wobei die axiale Ausgangsposition am zweiten axialen Anschlag angeordnet ist. Das Linearfederelement stellt den Drehknopf infolge der ersten axialen Verschiebungsbewegung stets automatisch in die axiale Ausgangsposition zurück. Dadurch wird eine stabile axiale Ausgangsposition geschaffen, die als Referenzposition insbesondere im Hinblick auf eine einfache und intuitive Betätigung des Drehschalters durch den Fahrzeugführer besonders wichtig ist.

Der Betätigungsschaltzustand resultiert aus der ersten axialen Verschiebungsbewegung des Drehknopfes in die erste Verschiebungsrichtung ausgehend von der axialen Ausgangsposition bis an den ersten axialen Anschlag, wobei der Löseschaltzustand aus der zweiten axialen Verschiebungsbewegung des Drehknopfes in die erste Verschiebungsrichtung ausgehend von der axialen Ausgangsposition bis an den ersten axialen Anschlag resultiert. Da der Drehknopf mittels des linearen Federelementes an den zweiten axialen Anschlag zurückgestellt wird, ergibt sich für den Fahrzeugführer vor jedem Betätigen und Lösen der elektronischen Parkbremsvorrichtung zunächst eine definierte Ausgangsstellung des Drehknopfs bezogen auf das Drehknopfgegenstück. Hierdurch lassen sich der Betätigungsschaltzustand sowie der Löseschaltzustand eindeutig und mit einer geringeren Fehlerwahrscheinlichkeit herbeiführen. Da der Fahrzeugführer zum Herbeiführen des Betätigungsschaltzustands sowie des Löseschaltzustands den Drehschalter wie eine Art Drucktaster bedienen kann, ergibt sich daraus für ihn eine sehr einfache und intuitive Bedienbarkeit.

Zusätzlich kann vorgesehen sein, dass der Trailertestschaltzustand aus einer dritten Drehbewegung des Drehknopfes ausgehend von seiner rotatorischen Ausgangsposition in die zweite Drehrichtung bis an den zweiten rotatorischen Anschlag resultiert, falls der Drehknopf an dem zweiten axialen Anschlag angeordnet ist und falls sich der Drehschalter im Betätigungsschaltzustand befindet. Um den Trailertestschaltzustand funktional und strukturell eindeutig von dem Betätigungs- und Löseschaltzustand zu trennen, ist es besonders vorteilhaft, den Trailertestschaltzustand einer dritten Drehbewegung des Drehknopfs zuzuordnen. Dadurch kann der Fahrzeugführer eindeutig zwischen dem infolge der axialen Verschiebungsbewegung resultierenden Schaltzustände und den infolge der dritten Drehbewegung resultierenden Trailertestschaltzustands unterscheiden.

Ferner ist vorstellbar, dass der graduelle Schaltzustand aus einer vierten Drehbewegung des Drehknopfes ausgehend von seiner rotatorischen Ausgangsposition in die zweite Drehrichtung bis an den zweiten rotatorischen Anschlag resultiert, falls der Drehknopf an dem zweiten axialen Anschlag angeordnet ist und falls sich der Drehschalter im Löseschaltzustand befindet. Bezüglich des graduellen Schaltzustands gilt dasselbe wie bereits im Zusammenhang mit dem Trailertestschaltzustand. Nämlich, dass es für eine intuitivere und verbesserte Betätigung des Drehschalters durch den Fahrzeugführer besonders vorteilhaft ist, wenn sich der Drehknopf an einer definierten radialen Ausgangsposition befindet. Diese befindet sich in einer durch den zweiten axialen Anschlag definierten Ebene, innerhalb welcher sich der Drehknopf entsprechend der vierten Drehbewegung verdrehen lässt. Um die Funktionssicherheit zu erhöhen, ist es besonders vorteilhaft, dass der graduelle Schaltzustand nur dann herbeiführbar ist, wenn sich der Drehschalter im Löseschaltzustand befindet, d.h. die elektronische Parkbremsvorrichtung bereits gelöst bzw. deaktiviert ist. Diese Kombination erlaubt beispielsweise eine funktionell eindeutige Herbeiführung einer graduellen Betätigung der elektronischen Parkbremsvorrichtung, ist jedoch nicht auf diese beschränkt. Zudem ist denkbar, dass die graduelle Betätigung der elektronischen Parkbremsvorrichtung in Abhängigkeit der Position des Drehknopfes, die aus der jeweiligen Drehbewegung resultiert, einstellbar ist.

Auch denkbar ist, dass der Betätigungsschaltzustand aus der ersten Drehbewegung des Drehknopfes ausgehend von seiner rotatorischen Ausgangsposition in die erste Drehrichtung bis an den ersten rotatorischen Anschlag resultiert und wobei der Löseschaltzustand aus der zweiten Drehbewegung des Drehknopfes ausgehend von seiner rotatorischen Ausgangsposition in die zweite Drehrichtung bis an den zweiten rotatorischen Anschlag resultiert, falls jeweils der Drehknopf an dem zweiten axialen Anschlag angeordnet ist. Die jeweiligen Schaltzustände des Drehschalters können, wie bereits zuvor beschrieben, mit einer sehr hohen Variabilität auf der Grundlage der axialen Verschiebebewegungen und Drehbewegungen des Drehknopfs bezogen auf das Drehknopf Gegenstück herbeigeführt werden. So ist es ebenfalls in vorteilhafterweise denkbar, dass der Betätigungs- und Löseschaltzustand aus der ersten und zweiten Drehbewegung des Drehknopfs resultiert, falls dieser sich an der am zweiten axialen Anschlag angeordneten axialen Ausgangsposition befindet.

Überdies ist möglich, dass der Trailertestschaltzustand aus einer dritten Drehbewegung des Drehknopfes ausgehend von seiner rotatorischen Ausgangsposition in die erste Drehrichtung bis an den ersten rotatorischen Anschlag resultiert, falls der Drehknopf an dem zweiten axialen Anschlag angeordnet ist und falls sich der Drehschalter im Betätigungsschaltzustand befindet. Aufgrund der funktionalen Verknüpfung des Trailertestschaltzustands und des Betätigungsschaltzustands jeweils mit der ersten Drehrichtung kann die Bedienbarkeit des Drehschalters vereinfacht werden, da die Trailertestfunktion derselben Betätigungslogik folgt wie der des Betätigungsschaltzustands. Da der Trailertestschaltzustand nur aktivierbar ist, falls der Drehknopf an dem zweiten axialen Anschlag angeordnet ist und falls sich der Drehschalter im Betätigungsschaltzustand befindet, kann so die Funktionssicherheit der elektronischen Parkbremsvorrichtung bzw. des Nutzfahrzeugs zusätzlich erhöht werden.

Weiter kann vorgesehen sein, dass der graduelle Schaltzustand aus einer vierten Drehbewegung des Drehknopfes ausgehend von seiner rotatorischen Ausgangsposition in die erste Drehrichtung bis an den ersten rotatorischen Anschlag resultiert und wobei der Streckbremsschaltzustand aus einer fünften Drehbewegung des Drehknopfes ausgehend von seiner rotatorischen Ausgangsposition in die zweite Drehrichtung bis an den zweiten rotatorischen Anschlag resultiert, falls sich der Drehschalter im Löseschaltzustand befindet und falls der Drehknopf bei beiden Schaltzuständen infolge einer axialen Verschiebungsbewegung in die erste Verschiebungsrichtung ausgehend von der axialen Ausgangsposition bis an den ersten axialen Anschlag an diesem angeordnet ist. Um mit dem graduellen Schaltzustand und dem Streckbremsschaltzustand zwei weitere Schaltzustände infolge von Drehbewegungen des Drehknopfs vorzusehen, ist es vorteilhaft, dass diese nicht an der axialen Ausgangsposition einnehmbar sind, sondern dass diese aus einer funktional kombinierten axialen Verschiebe- und Drehbewegung resultieren. Dadurch lässt sich eine eindeutige Unterscheidung zwischen dem graduellen Schaltzustand und dem Streckbremsschaltzustand im Hinblick auf den Betätigungs-, Trailertest- und Löseschaltzustand erzielen, die bereits mit der axialen Stellung des Drehknopfs an dem zweiten axialen Anschlag verknüpft sind.

Zudem vorstellbar ist, dass der Betätigungsschaltzustand aus der ersten Drehbewegung des Drehknopfes ausgehend von seiner rotatorischen Ausgangsposition in die erste Drehrichtung bis an den ersten rotatorischen Anschlag resultiert und wobei der Löseschaltzustand aus der zweiten Drehbewegung des Drehknopfes ausgehend von seiner rotatorischen Ausgangsposition in die zweite Drehrichtung bis an den zweiten rotatorischen Anschlag resultiert, falls der Drehknopf bei beiden Schaltzuständen infolge einer axialen Verschiebungsbewegung in die erste Verschiebungsrichtung ausgehend von der axialen Ausgangsposition bis an den ersten axialen Anschlag an diesem angeordnet ist. Folglich kann es sich auch als vorteilhaft erweisen, wenn der Betätigungsschaltzustand und der Löseschaltzustand aus einer kombinierten axialen Verschiebebewegung und einer jeweiligen Drehbewegung des Drehknopfs resultiert, da sich in Folge der dieser funktionalen Kombination die Bedienungssicherheit erhöhen lässt. Schließlich erhöht eine kombinierte axiale Verschiebe- und einer Drehbewegungen die Bedienungskomplexität, so dass die Wahrscheinlichkeit eines unerwünschten Bedienens des Drehschalters vermindert werden können. Da in diesem Fall der Löseund Betätigungsschaltzustand lediglich dann einnehmbar sind, wenn sich der Drehknopf an dem ersten axialen Anschlag befindet und sich zudem ausgehend von dem zweiten axialen Anschlag in diesem Fall keine Schaltzustände einnehmen lassen, bietet sich so die Möglichkeit, den Drehknopf an dem zweiten axialen Anschlag zu verrasten. Um eine zuverlässige Verrastung sicherzustellen, muss das Linearfederelement allerdings derart bemessen sein, um die erforderliche Kraft zum Verrasten aufzubringen.

Außerdem ist denkbar, dass der Trailertestschaltzustand aus einer dritten Drehbewegung des Drehknopfes ausgehend von seiner rotatorischen Ausgangsposition in die erste Drehrichtung bis an den ersten rotatorischen Anschlag resultiert, falls der Drehknopf infolge einer axialen Verschiebungsbewegung in die erste Verschiebungsrichtung ausgehend von der axialen Ausgangsposition bis an den ersten axialen Anschlag an diesem angeordnet ist und falls sich der Drehschalter im Betätigungsschaltzustand befindet. Die kombinierte axiale Verschiebe- und Drehbewegung erhöht die Bedienungskomplexität vorteilhafterweise in soweit, dass die Wahrscheinlichkeit eines unerwünschten Bedienens des Drehschalters durch den Fahrzeugführer vermindert werden kann.

Des Weiteren ist möglich, dass der graduelle Schaltzustand aus einer vierten Drehbewegung des Drehknopfes ausgehend von seiner rotatorischen Ausgangsposition in die erste Drehrichtung bis an den ersten rotatorischen Anschlag resultiert, falls der Drehknopf infolge einer axialen Verschiebungsbewegung in die erste Verschiebungsrichtung ausgehend von der axialen Ausgangsposition bis an den ersten axialen Anschlag an diesem angeordnet ist. Auch im Zusammenhang mit dem graduellen Schaltzustand wird zwar durch die kombinierte axiale Verschiebe- und Drehbewegung des Drehknopfes die Bediengungskomplexität erhöht. Jedoch wirkt sich diese Komplexitätserhöhung in soweit vorteilhafterweise aus, dass die Wahrscheinlichkeit eines unerwünschten Bedienens des Drehschalters durch den Fahrzeugführer vermindert werden kann.

Weiterhin kann vorgesehen sein, dass die Streckbremsfunktion in Abhängigkeit der jeweiligen Drehbewegung des Drehknopfs proportional steuerbar ist. Der Drehschalter kann in diesem Zusammenhang ein Potentiometer aufweisen. Anhand dieses Potentiometers kann insbesondere die Streckbremsfunktion in Abhängigkeit der aus der axialen Verschiebe- und/oder Drehbewegung des Drehknopfes dessen resultierende Position besonders einfach der jeweiligen Streckbremsfunktion insbesondere proportional zugeordnet werden. Daraus ergibt sich für den Fahrzeugführer eine besonders einfach einzustellende bzw. zu dosierende Streckbremsfunktion der elektronischen Betriebsbremsvorrichtung. Zudem vorstellbar ist, dass der Betätigungsschaltzustand, der Löseschaltzustand und der Trailertestschaltzustand des Drehschalters im Wesentlichen im Stillstand des Nutzfahrzeugs einnehmbar sind. Dadurch wird ein unbefugtes Herbeiführen dieser mit der elektronischen Parkbremsvorrichtung in Verbindung stehenden Schaltzustände wirksam verhindert.

Ferner denkbar ist, dass wenigstens ein Schaltzustand des Drehschalters in Abhängigkeit wenigstens eines weiteren Schaltzustands einer Betätigungseinrichtung, insbesondere eines Fußpedals, der Betriebsbremsvorrichtung des Fahrzeugs einnehmbar ist. Die Abhängigkeit des Schaltzustandes des Drehschalters mit demjenigen der weiteren Betätigungseinrichtung erzielt eine noch weiter erhöhte Fahrzeugsicherheit. Beispielsweise ist es denkbar, dass der Betätigungsschaltzustand, der Trailertestschaltzustand und der Löseschaltzustand des Drehschalters nur unter der Bedingung einnehmbar sind, falls der Fahrzeugführer das Bremspedal betätigt und so die Betriebsbremse des Nutzfahrzeugs aktiviert. Unterlässt der Fahrzeugführer in diesem Fall das Betätigen des Bremspedals, kann er durch ein optisches, akustisches und/oder haptisches Signal darauf aufmerksam gemacht werden.

Zudem ist möglich, dass der Drehschalter wenigstens eine Beleuchtungseinrichtung und wenigstens ein Symbol umfasst, die den jeweiligen Schaltzustand des Drehschalters und den jeweiligen Betriebszustand der Parkbremsvorrichtung und/oder der Betriebsbremsvorrichtung anzeigen. Zum einen wird dadurch die eindeutige Zuordnung der jeweiligen Schaltzustände des Drehschalters mit dem entsprechenden Betriebszustand der elektronischen Parkbrems- und Betriebsbremsvorrichtung ermöglicht. Zum anderen kann es für eine Vereinfachung der, insbesondere manuellen, Betätigung außerordentlich wichtig sein, den Betriebszustand der elektronischen Parkbremsvorrichtung an dem Drehschalter für den Fahrzeugführer optisch anzuzeigen.

Weiterhin ist denkbar, dass die Beleuchtungseinrichtung und/oder das Symbol an dem Drehknopf angebracht sind. Besonders effizient, zielführend und intuitiv wird das Anzeigen des jeweiligen Schaltzustandes der elektronischen Parkbremsvorrichtung dann, wenn die Beleuchtungseinrichtung und/oder das Symbol direkt an dem Drehknopf des Drehschalters angebracht sind. Denn üblicherweise ist davon auszugehen, dass aufgrund des manuellen Betätigens des Drehknopfes durch den Fahrzeugführer dieser zuerst in dessen Blickfeld fällt und somit die optische Anzeige des Betriebszustandes der elektronischen Parkbremsvorrichtung vom Fahrzeugführer am effektivsten und eindeutigsten wahrgenommen werden kann.

Allerdings kann auch vorgesehen sein, dass die Beleuchtungseinrichtung und/oder das Symbol an dem Drehknopfgegenstück angebracht sind. Schließlich kann davon ausgegangen werden, dass dies mit Kostenvorteilen gegenüber dem Anbringen der Beleuchtungseinrichtung und/oder des Symbols an dem funktionsbedingt drehbaren Drehknopf einhergeht. Deshalb kann ein mögliches Absenken der Informationsvermittlung durch die optische Anzeige an den Fahrzeugführer in Anbetracht der zu erwartenden Kostenvorteile vertretbar erscheinen.

Im Übrigen kann vorgesehen sein, dass das Symbol mittels der Beleuchtungseinrichtung beleuchtbar ist. Dies ist insbesondere unter verdunkelten Umgebungsbedingungen des Nutzfahrzeugs (z.B. bei einer Nachtfahrt) vorteilhaft.

Weitere Einzelheiten und Vorteile der Erfindung sollen nun anhand der in den Figuren dargestellten Ausführungsbeispiele näher erläutert werden.

Es zeigen:
Fig. 1 eine schematische perspektivische Ansicht eines Beispiels eines Drehschalters sowie einer elektronischen Parkbremsvorrichtung, welche nicht unter dem beanspruchten Schutzumfang fallen;
Fig. 2 eine schematische perspektivische Ansicht einesAusführungsbeispiels eines erfindungsgemäßen Drehschalters sowie einer erfindungsgemäßen elektronischen Parkbremsvorrichtung;
Fig. 3 eine schematische perspektivische Ansicht eines weiteren Beispiels eines Drehschalters sowie einer elektronischen Parkbremsvorrichtung, welche nicht unter dem beanspruchten Schutzumfang fallen; und
Fig.4 eine schematische perspektivische Ansicht eines weiteren Beispiels eines Drehschalters sowie einer elektronischen Parkbremsvorrichtung, welche nicht unter dem beanspruchten Schutzumfang fallen.

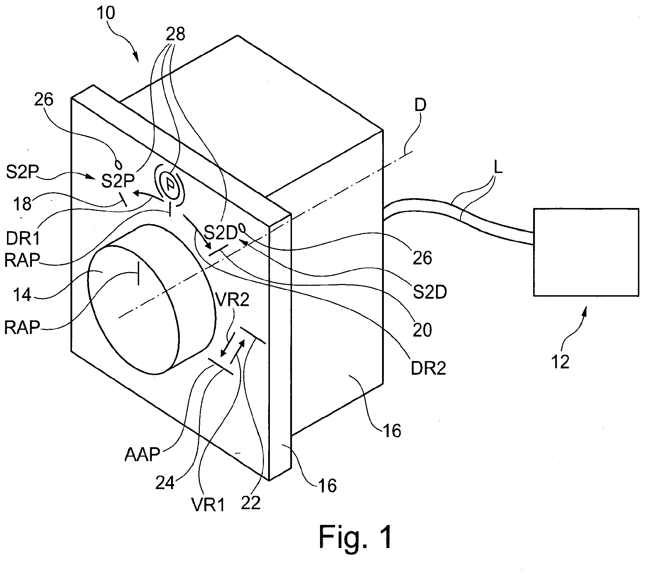

Fig. 1 zeigt eine schematische perspektivische Ansicht eines Beispiels eines Drehschalters 10 sowie einer elektronischen Parkbremsvorrichtung 12.

Der Drehschalter 10 ist mittels zwei Leitungen L mit der elektronischen Parkbremsvorrichtung 12 verbunden. Der Drehschalter 10 kann auch mittels einer Leitung L oder mit mehreren als zwei Leitungen L mit der elektronischen Parkbremsvorrichtung 12 verbunden sein.

Der Drehschalter 10 weist ferner einen Drehknopf 14 und ein Drehknopfgegenstück 16 auf.

Der Drehknopf 14 und das Drehknopfgegenstück 16 sind drehbar miteinander verbunden und um eine gemeinsame Drehachse D relativ zueinander verdrehbar.

Der Drehknopf 14 ist zudem an dem Drehknopfgegenstück 16 drehbar gelagert und ragt mit einem zylindrischen Vorsprung über das Drehknopfgegenstück 16 hinaus.

Der Drehknopf 14 ist bezogen auf das Drehknopfgegenstück 16 um eine erste Drehrichtung DR1 und um eine zweite Drehrichtung DR2 verdrehbar.

Die erste Drehrichtung DR1 ist der zweiten Drehrichtung DR2 entgegengesetzt.

Zudem ist der Drehknopf 14 entlang der gemeinsamen Drehachse D bezogen auf das Drehknopfgegenstück 16 axial verschiebbar.

Der Drehknopf 14 ist bezogen auf das Drehknopfgegenstück 16 entlang einer ersten Verschiebungsrichtung VR1 und entlang einer zweiten Verschiebungsrichtung VR2 axial verschiebbar.

Die erste Verschiebungsrichtung VR1 ist der zweiten Verschiebungsrichtung VR2 entgegengesetzt.

Der Drehschalter 10 umfasst weiter einen Betätigungsschaltzustand S2P und wenigstens einen Löseschaltzustand S2D.

Der Drehschalter 10 umfasst außerdem einen ersten rotatorischen Anschlag 18 und einen zweiten rotatorischen Anschlag 20 und eine rotatorische Ausgangsposition RAP. Der erste rotatorische Anschlag 18, der zweite rotatorische Anschlag 20 sowie die rotatorische Ausgangsposition RAP sind entlang eines kreisförmigen Bahnkurvenabschnitts angeordnet.

Die rotatorische Ausgangsposition RAP ist zwischen dem ersten und dem zweiten rotatorischen Anschlag 18, 20 angeordnet.

Der Drehschalter 10 umfasst weiter ein Drehfederelement (nicht in Fig. 1 gezeigt), das sowohl mit dem Drehknopf 14 als auch mit dem Drehknopfgegenstück 16 wirkverbunden ist.

Des Weiteren umfasst der Drehschalter 10 einen ersten axialen Anschlag 22 und einen zweiten axialen Anschlag 24 und eine axiale Ausgangsposition AAP.

Die axiale Ausgangsposition AAP des Drehknopfs 14 ist an dem zweiten axialen Anschlag 24 angeordnet.

Der Drehknopf 14 ist an dem ersten axialen Anschlag 22 näher zu dem Drehknopfgegenstück 16 beabstandet als an dem zweiten axialen Anschlag 24.

Der Drehschalter 10 umfasst weiter zwei Beleuchtungseinrichtungen 26 mehrere Symbole 28.

Die Beleuchtungseinrichtungen 26 sowie die Symbole 28 sind gemäß Fig. 1 auf dem Drehknopfgegenstück 16 angebracht.

Zusätzlich oder alternativ können die Beleuchtungseinrichtungen 26 sowie die Symbole 28 auch an dem Drehknopf 14 angebracht sein.

Die Funktion des Drehschalters 10 gemäß Fig. 1 lässt sich nun wie folgt beschreiben:
Der Drehschalter 10 ist grundsätzlich zum Steuern einer elektronischen Parkbremsvorrichtung 12 eines Nutzfahrzeugs vorgesehen.

Ferner kann der Drehschalter 10 auch zum Steuern einer elektronischen Betriebsbremsvorrichtung (nicht in Fig. 1 gezeigt) eines Nutzfahrzeugs vorgesehen sein.

Die beiden elementarsten Schaltzustände, nämlich der Betätigungsschaltzustand S2P sowie der Löseschaltzustand S2D des Drehschalters 10 sind gemäß Fig. 1 gezeigt.

Durch das Herbeiführen dieser beiden Schaltzustände wird innerhalb des Drehschalters 10 ein entsprechendes Schaltsignal erzeugt und über die Leitungen L einer Steuerungseinheit (nicht in Fig. 1 gezeigt) zugeführt, woraufhin die elektronische Parkbremsvorrichtung 12 in Antwort auf diese Steuersignale gesteuert wird.

Dabei resultiert der Betätigungsschaltzustand S2P aus einer ersten Drehbewegung des Drehknopfes 14 in eine erste Drehrichtung DR1 bezogen auf das Drehknopfgegenstück 16.

Hierbei ist der Betätigungsschaltzustand S2P einem Betätigen der elektronischen Parkbremsvorrichtung 12 zugeordnet

Um den Betätigungsschaltzustand S2P herbeizuführen, führt der Fahrzeugführer die erste Drehbewegung des Drehknopfs 14 ausgehend von dessen rotatorischer Ausgangsposition RAP in die erste Drehrichtung DR1 aus, bis der Drehknopf 14 in seiner Drehbewegung durch den ersten radialen Anschlag 18 begrenzt wird.

Für eine eindeutige Funktionserfüllung des Drehschalters 10 ist es zweckmäßig, wenn der Betätigungsschaltzustand S2P der Drehposition des Drehknopfes 14 an dem ersten rotatorischen Anschlag 18 entspricht.

Analog zu dem Betätigungsschaltzustand S2P resultiert der Löseschaltzustand S2D aus einer zweiten Drehbewegung des Drehknopfs 14 in eine zweite Drehrichtung DR2 bezogen auf das Drehknopfgegenstück 16.

Der Löseschaltzustand S2D ist demzufolge einem Lösen der Parkbremsvorrichtung 12 zugeordnet.

Jedoch kann der Löseschaltzustand S2D nur unter der Bedingung herbeigeführt werden, falls sich der Drehschalter bereits im Betätigungsschaltzustand S2P befindet.

Um den Löseschaltzustand S2D herbeizuführen führt der Fahrzeugführer die zweite Drehbewegung des Drehknopfs 14 ausgehend von dessen radialer Ausgangsposition RAP in die zweite Drehrichtung DR2 aus, bis der Drehknopf 14 in seiner Drehbewegung durch den zweiten radialen Anschlag 20 begrenzt wird.

Für eine eindeutige Funktionserfüllung des Drehschalters 10 ist es zweckmäßig, wenn der Löseschaltzustand S2D der Drehposition des Drehknopfes 14 an dem zweiten rotatorischen Anschlag 20 entspricht.

Der Drehknopf 14 wird sodann an dem ersten rotatorischen Anschlag 18 oder an dem zweiten rotatorischen Anschlag 20 oder an einer beliebigen rotatorischen Position zwischen erstem rotatorischen und zweitem rotatorischen Anschlag 18, 20 ungleich der rotatorischen Ausgangsposition RAP mittels des Drehfederelements in die rotatorische Ausgangsposition RAP zurückgestellt.

Sowohl der Betätigungsschaltzustand S2P als auch der Löseschaltzustand S2D des ersten Ausführungsbeispiels des Drehschalters 10 gemäß Fig. 1 beziehen sich auf die axiale Ausgangsposition AAP des Drehknopfs.

Der Betätigungsschaltzustand S2P sowie Löseschaltzustand S2D des Drehschalters 10 können zudem in Abhängigkeit eines weiteren Schaltzustands eines Fußpedals der elektronischen Betriebsbremsvorrichtung des Fahrzeugs einnehmbar sein.

So kann der Betätigungsschaltzustand S2P sowie Löseschaltzustand S2D beispielsweise nur dann eingenommen werden, wenn das Fußpedal durch den Fahrzeugführer betätigt wird und die Betriebsbremse in Antwort darauf betätigt wird.

Im Übrigen können durch die Beleuchtungseinrichtungen 26 und die Symbole 28 ferner der Betätigungsschaltzustand S2P und der Löseschaltzustand S2D des Drehschalters 14 und der jeweilige Betriebszustand der Parkbremsvorrichtung und der Betriebsbremsvorrichtung angezeigt werden.

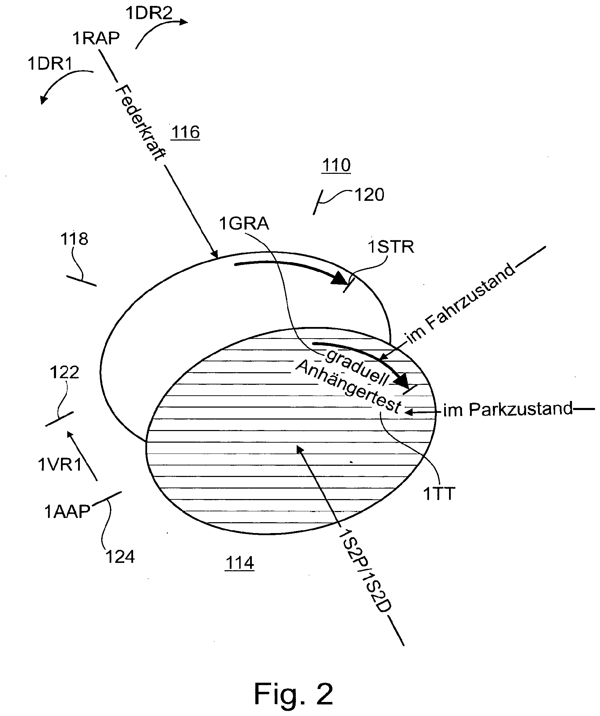

**Fig. 2** zeigt eine schematische perspektivische Ansicht eines Ausführungsbeispiels eines erfindungsgemäßen Drehschalters 110 sowie einer erfindungsgemäßen elektronischen Parkbremsvorrichtung 112.

Das Ausführungsbeispiel des erfindungsgemäßen Drehschalters 110 und der erfindungsgemäßen elektronischen Parkbremsvorrichtung 112 (nicht in Fig. 2 gezeigt) weisen im Wesentlichen dieselben strukturellen Merkmale wie das in Fig. 1 gezeigte Beispiel des Drehschalters 10 und der elektronischen Parkbremsvorrichtung 12 auf.

Lediglich die folgenden funktionalen Unterschiede sollen aufgezeigt werden: Zusätzlich zum Betätigungsschaltzustand 1S2P und Löseschaltzustand 1S2D weist der Drehschalter 110 einen Trailertestschaltzustand 1TT sowie einen graduellen Schaltzustand 1GRA auf.

Der Trailertestschaltzustand 1TT ist einer Trailertestfunktion der elektronischen Parkbremsvorrichtung 112 zugeordnet.

Der graduelle Schaltzustand 1GRA ist einem graduellen Betätigen der elektronischen Parkbremsvorrichtung 112 zugeordnet.

Gemäß Fig. 2 resultiert der Betätigungsschaltzustand 1S2P aus der ersten axialen Verschiebungsbewegung des Drehknopfes 114 in die erste Verschiebungsrichtung 1VR1 ausgehend von der axialen Ausgangsposition 1AAP bis an den ersten axialen Anschlag 118.

Für eine eindeutige Funktionserfüllung des Drehschalters 110 ist es zweckmäßig, wenn der Betätigungsschaltzustand 1S2P der axialen Position des Drehknopfes 114 an dem ersten axialen Anschlag 118 entspricht.

Der Löseschaltzustand 1S2P wiederum resultiert aus der zweiten axialen Verschiebungsbewegung des Drehknopfes 114 ebenfalls in die erste Verschiebungsrichtung 1VR1 ausgehend von der axialen Ausgangsposition 1AAP bis an den ersten axialen Anschlag 122.

Die erste und zweite axiale Verschiebungsbewegung des Drehknopfs 114 kann als ein Eindrücken des Drehknopfs 114 in das Drehknopfgegenstück 116 ausgebildet sein.

Ebenfalls ist es allerdings auch denkbar, dass die erste und zweite axiale Verschiebungsbewegung des Drehknopfs 114 als ein Herausziehen des Drehknopfs 114 aus dem Drehknopfgegenstück 116 ausgebildet sein kann.

Der Löseschaltzustand 1S2D kann jedoch nur unter der Bedingung herbeigeführt werden, falls sich der Drehschalter bereits im Betätigungsschaltzustand 1S2P befindet.

Auch im Zusammenhang mit dem Löseschaltzustand 1S2P ist es für dessen eindeutige Funktionserfüllung zweckmäßig, wenn der Löseschaltzustand 1S2P der axialen Position des Drehknopfes 114 an dem ersten axialen Anschlag 118 entspricht.

Der Drehknopf 114 wird an dem ersten axialen Anschlag 122 oder an einer beliebigen Position zwischen erstem axialen und zweitem axialen Anschlag 122, 124 mittels des Linearfederelements an den zweiten axialen Anschlag 124 zurückgestellt, an welchem die axiale Ausgangsposition 1AAP angeordnet ist.

Befindet sich der Drehschalter 110 im Betätigungsschaltzustand 1S2P bietet sich für den Fahrzeugführer des Nutzfahrzeugs die Möglichkeit, den Trailertestschaltzustand 1TT herbeizuführen.

Demzufolge resultiert der Trailertestschaltzustand 1TT aus einer dritten Drehbewegung des Drehknopfes 114 ausgehend von seiner rotatorischen Ausgangsposition 1RAP in die zweite Drehrichtung 1DR2 bis an den zweiten rotatorischen Anschlag 120.

Dieses Herbeiführen durch den Fahrzeugführer ist allerdings nur möglich, falls der Drehknopf 114 an dem zweiten axialen Anschlag 124 angeordnet ist und falls sich der Drehschalter 110 im Betätigungsschaltzustand 1S2P befindet.

Ferner ist das Herbeiführen des Trailertestschaltzustands 1TT durch den Fahrzeugführer ist nur dann möglich, falls das Nutzfahrzeug im Wesentlichen im Stillstand befindet.

Um den Trailertestschaltzustand 1TT zu deaktivieren, kann der Fahrzeugführer den Löseschaltzustand 1S2D, wie bereits zuvor beschreiben, herbeiführen

Wenn sich der Drehschalter im Löseschaltzustand 1S2D befindet, bietet sich für den Fahrzeugführer zusätzlich die Möglichkeit, einen graduellen Schaltzustand 1GRA einzustellen.

Der graduelle Schaltzustand 1GRA resultiert aus einer vierten Drehbewegung des Drehknopfes 114 ausgehend von seiner rotatorischen Ausgangsposition 1RAP in die zweite Drehrichtung 1DR2 bis an den zweiten rotatorischen Anschlag 120.

Dieses Herbeiführen des graduellen Schaltzustands 1GRA durch den Fahrzeugführer ist allerdings nur möglich, falls der Drehknopf 114 an dem zweiten axialen Anschlag 124 angeordnet ist und falls sich der Drehschalter 110 im Löseschaltzustand 1S2D befindet.

Mit Hilfe des graduellen Schaltzustands 1GRA ist beispielsweise ein graduelles Betätigen der elektronischen Parkbremsvorrichtung einstellbar.

Ferner ist das Herbeiführen des graduellen Schaltzustands 1GRA durch den Fahrzeugführer ist nur dann möglich, falls das Nutzfahrzeug im Wesentlichen in einem bewegten Zustand befindet.

Eine weitere Stuerungsanwendung ist die der Steuerung der elektronischen Betriebsbremsvorrichtung des Nutzfahrzeugs mittels Streckbremsfunktion.

In diesem Zusammenhang weist der Drehschalter 110 einen Streckbremsschaltzustand 1STR auf, der einer Streckbremsfunktion der Betriebsbremsvorrichtung zugeordnet ist. Der Streckbremsschaltzustand 1STR wiederum resultiert aus einer weiteren Drehbewegung des Drehknopfes 114 in die zweite Drehrichtung 1DR2 bis an den zweiten rotatorischen Anschlag 120 ausgehend von seiner rotatorischen Ausgangsposition 1RAP. Der Streckbremsschaltzustand 1STR ist dann einnehmbar, falls sich der Drehschalter 110 im Löseschaltzustand 1S2D befindet und falls der Drehknopf 114 bei dem Streckbremsschaltzustand 1STR infolge einer axialen Verschiebungsbewegung in die erste Verschiebungsrichtung 1VR1 ausgehend von der axialen Ausgangsposition 1AAP bis an den ersten axialen Anschlag 122 an diesem angeordnet ist.

Die Streckbremsfunktion 1STR ist im Übrigen in Abhängigkeit der jeweiligen Drehbewegung des Drehknopfs 114 proportional steuerbar.

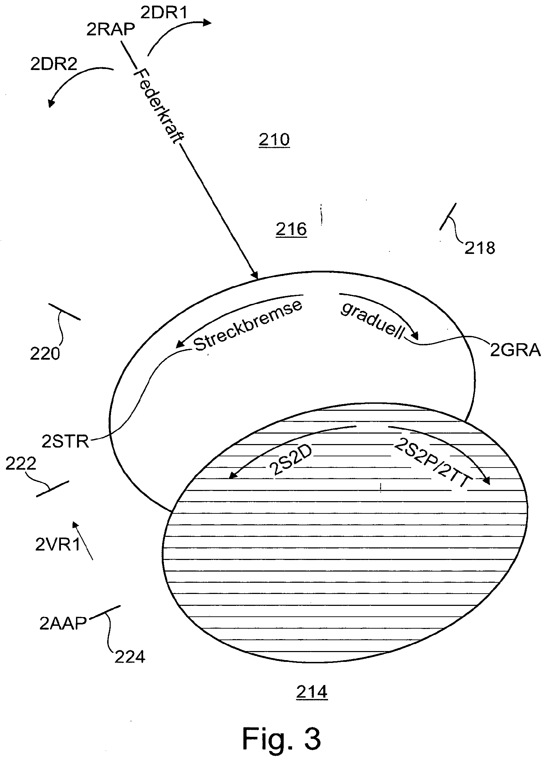

**Fig. 3** zeigt eine schematische perspektivische Ansicht eines weiteren Beispiels eines Drehschalters 210 sowie einer elektronischen Parkbremsvorrichtung 212.

Das weitere Beispiel des erfindungsgemäßen Drehschalters 210 und der elektronischen Parkbremsvorrichtung 212 (nicht in Fig. 3 gezeigt) weisen im Wesentlichen dieselben strukturellen Merkmale wie das in Fig. 1 gezeigte Beispiel des Drehschalters 10 und der elektronischen Parkbremsvorrichtung 12 auf.

Lediglich die folgenden funktionalen Unterschiede sollen aufgezeigt werden:
Gemäß Fig. 3 resultiert der Betätigungsschaltzustand 2S2P aus der ersten Drehbewegung des Drehknopfes 214 ausgehend von seiner rotatorischen Ausgangsposition 2RAP in die erste Drehrichtung 2DR1 bis an den ersten rotatorischen Anschlag 218.

Ferner resultiert der Löseschaltzustand 2S2D aus der zweiten Drehbewegung des Drehknopfes 214 ausgehend von seiner rotatorischen Ausgangsposition 2RAP in die zweite Drehrichtung 2DR2 bis an den zweiten rotatorischen Anschlag 220.

Sowohl der Betätigungsschaltzustand 2S2P als auch der Löseschaltzustand 2S2D sind nur unter der Bedingung einnehmbar, falls jeweils der Drehknopf 214 an dem zweiten axialen Anschlag 224 angeordnet ist.

Für eine eindeutige Funktionserfüllung des Drehschalters 210 ist es zweckmäßig, wenn der Betätigungsschaltzustand 2S2P bzw. der Löseschaltzustand der Drehposition des Drehknopfes 214 an dem ersten bzw. zweiten rotatorischen Anschlag 218, 20 entspricht.

Der Drehschalter 214 weist gemäß Fig. 3 ebenfalls einen Trailertestschaltzustand 2TT auf, der einnehmbar bzw. durch den Fahrzeugführer herbeiführbar ist, falls der Drehknopf 214 an dem zweiten axialen Anschlag 224 angeordnet ist und falls sich der Drehschalter 210 im Betätigungsschaltzustand 2S2P befindet.

Schließlich sollte der Fahrzeugführer den Trailertestschaltzustand 2TT nur bei bereits betätigter elektronischer Parkbremsvorrichtung durchführen.

Der Trailertestschaltzustand 2TT resultiert aus einer dritten Drehbewegung des Drehknopfes 214 ausgehend von seiner rotatorischen Ausgangsposition 2RAP in die erste Drehrichtung 2DR1 bis an den ersten rotatorischen Anschlag 218.

Für eine eindeutige Funktionserfüllung des Drehschalters 210 ist es zweckmäßig, wenn der Trailertestschaltzustand 2TT der Drehposition des Drehknopfes 214 an dem ersten rotatorischen Anschlag 218 entspricht.

Gemäß dem weiteren Beispiel ist der Drehschalter 210 zusätzlich zum Steuern einer elektronischen Betriebsbremsvorrichtung (nicht in Fig. 3 gezeigt) des Nutzfahrzeugs eingerichtet.

Eine weitere Anwendung der Steuerung der elektronischen Betriebsbremsvorrichtung des Nutzfahrzeugs ist eine Streckbremsfunktion.

In diesem Zusammenhang weist der Drehschalter 210 einen Streckbremsschaltzustand 2STR auf, der einer Streckbremsfunktion der Betriebsbremsvorrichtung zugeordnet ist. Der Streckbremsschaltzustand 2STR wiederum resultiert aus einer fünften Drehbewegung des Drehknopfes 214 in die zweite Drehrichtung 2DR2 bis an den zweiten rotatorischen Anschlag 220 ausgehend von seiner rotatorischen Ausgangsposition 2RAP. Der Streckbremsschaltzustand 2STR ist dann einnehmbar, falls sich der Drehschalter 210 im Löseschaltzustand 2S2D befindet und falls der Drehknopf 214 bei dem Streckbremsschaltzustand 2STR infolge einer axialen Verschiebungsbewegung in die erste Verschiebungsrichtung 2VR1 ausgehend von der axialen Ausgangsposition 2AAP bis an den ersten axialen Anschlag 222 an diesem angeordnet ist.

Die Streckbremsfunktion 2STR ist im Übrigen in Abhängigkeit der jeweiligen Drehbewegung des Drehknopfs 214 proportional steuerbar.

Ferner resultiert der graduelle Schaltzustand 2GRA aus einer vierten Drehbewegung des Drehknopfes 214 ausgehend von seiner rotatorischen Ausgangsposition 2RAP in die erste Drehrichtung 2DR1 bis an den ersten rotatorischen Anschlag 218.

Der graduelle Schaltzustand 2GRA ist dann einnehmbar, falls sich der Drehschalter 210 im Löseschaltzustand 2S2D befindet und falls der Drehknopf 214 bei dem graduellen Schaltzustand 2GRA infolge einer axialen Verschiebungsbewegung in die erste Verschiebungsrichtung 2VR1 ausgehend von der axialen Ausgangsposition 2AAP bis an den ersten axialen Anschlag 222 an diesem angeordnet ist.

Die axiale Verschiebungsbewegung des Drehknopfs 214 kann als ein Eindrücken des Drehknopfs 214 in das Drehknopfgegenstück 216 ausgebildet sein.

Allerdings ist es auch denkbar, dass die Verschiebungsbewegung des Drehknopfs 214 als ein Herausziehen des Drehknopfs 214 aus dem Drehknopfgegenstück 216 ausgebildet sein kann.

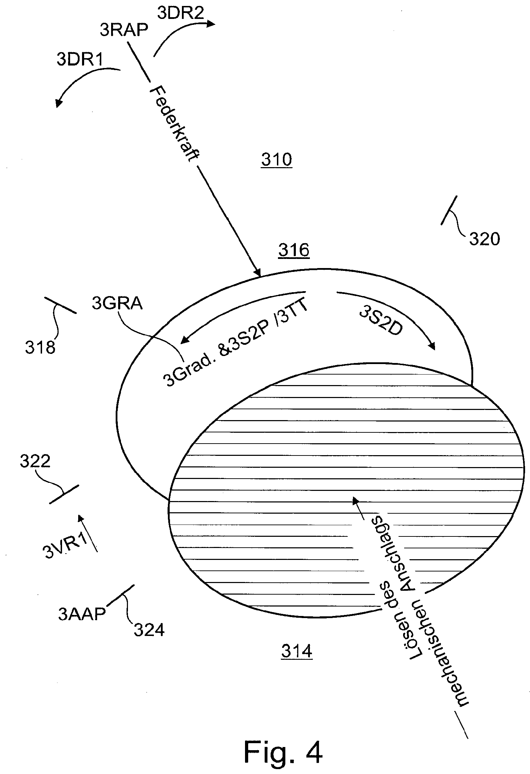

**Fig. 4** zeigt eine schematische perspektivische Ansicht eines weiteren Beispiels eines Drehschalters 310 sowie einer elektronischen Parkbremsvorrichtung 312.

Das weitere Beispiel des Drehschalters 310 und der elektronischen Parkbremsvorrichtung 312 (nicht in Fig. 4 gezeigt) weist im Wesentlichen dieselben strukturellen Merkmale wie das in Fig. 1 gezeigte Beispiel erstedes Drehschalters 10 und der elektronischen Parkbremsvorrichtung 12 auf.

Lediglich die folgenden funktionalen Unterschiede sollen aufgezeigt werden: Entsprechend Fig. 4 resultiert der Betätigungsschaltzustand 3S2P aus der ersten Drehbewegung des Drehknopfes 314 ausgehend von seiner radialen Ausgangsposition 3RAP in die erste Drehrichtung 3DR1 bis an den ersten radialen Anschlag 318.

Der Löseschaltzustand 3S2D resultiert darüber hinaus aus der zweiten Drehbewegung des Drehknopfes 314 ausgehend von seiner rotatorischen Ausgangsposition 3RAP in die zweite Drehrichtung 3DR2 bis an den zweiten rotatorischen Anschlag 320.

Jedoch sind der Löseschaltzustand 3S2D und der Betätigungsschaltzustand 3S2P nur unter der Bedingung einnehmbar, falls der Drehknopf 314 bei diesen beiden Schaltzuständen 3S2P, 3S2D infolge einer axialen Verschiebungsbewegung in die erste Verschiebungsrichtung 3VR1 ausgehend von der axialen Ausgangsposition 3AAP bis an den ersten axialen Anschlag 322 an diesem angeordnet ist.

Falls sich der Drehschalter 310 im Betätigungsschaltzustand 3S2P befindet, kann der Fahrzeugführer den Trailertestschaltzustand 3TT einstellen.

Diesbezüglich resultiert der Trailertestschaltzustand 3TT aus einer dritten Drehbewegung des Drehknopfes 314 ausgehend von seiner rotatorischen Ausgangsposition 3RAP in die erste Drehrichtung 3DR1 bis an den ersten rotatorischen Anschlag 318.

Allerdings ist der Trailertestschaltzustand 3TT lediglich unter der Bedingung einnehmbar, falls der Drehknopf 314 infolge einer axialen Verschiebungsbewegung in die erste Verschiebungsrichtung 3VR1 ausgehend von der axialen Ausgangsposition 3AAP bis an den ersten axialen Anschlag 322 an diesem angeordnet ist.

Der graduelle Schaltzustand 3GRA resultiert wiederum aus einer vierten Drehbewegung des Drehknopfes 314 ausgehend von seiner rotatorischen Ausgangsposition 3RAP in die erste Drehrichtung 3DR1 bis an den ersten rotatorischen Anschlag 318.

Die Bedingung für den graduellen Schaltzustand 3GRA ist dann gegeben, falls der Drehknopf 314 infolge einer axialen Verschiebungsbewegung in die erste Verschiebungsrichtung 3VR1 ausgehend von der axialen Ausgangsposition 3AAP bis an den ersten axialen Anschlag 322 an diesem angeordnet ist.

Die axiale Verschiebungsbewegung des Drehknopfs 314 kann als ein Eindrücken des Drehknopfs 314 in das Drehknopfgegenstück 316 ausgebildet sein.

Allerdings ist es auch denkbar, dass die Verschiebungsbewegung des Drehknopfs 314 als ein Herausziehen des Drehknopfs 314 aus dem Drehknopfgegenstück 316 ausgebildet sein kann.

Da gemäß viertem Ausführungsbeispiel alle Schaltzustände nach Erreichen der axialen Position des Drehknopfs 314 am ersten axialen Anschlag 322 durch eine Drehbewegung von dort aus resultieren, bietet sich zudem die Möglichkeit, an der axialen Ausgangsposition 3AAP eine axiale und rotatorische mechanische Verrastung vorzusehen.

### BEZUGSZEICHENLISTE

- .10: Drehschalter
- 12: elektronische Parkbremsvorrichtung
- 14: Drehknopf
- 16: Drehknopfgegenstück
- 18: erster rotatorischer Anschlag
- 20: zweiter rotatorischer Anschlag
- 22: erster axialer Anschlag
- 24: zweiter axialer Anschlag
- 26: Beleuchtungseinrichtung
- 28: Symbol

- 110: Drehschalter
- 112: elektronische Parkbremsvorrichtung
- 114: Drehknopf
- 116: Drehknopfgegenstück
- 118: erster rotatorischer Anschlag
- 120: zweiter rotatorischer Anschlag
- 122: erster axialer Anschlag
- 124: zweiter axialer Anschlag
- 126: Beleuchtungseinrichtung
- 128: Symbol

- 210: Drehschalter
- 212: elektronische Parkbremsvorrichtung
- 214: Drehknopf
- 216: Drehknopfgegenstück
- 218: erster rotatorischer Anschlag
- 220: zweiter rotatorischer Anschlag
- 222: erster axialer Anschlag
- 224: zweiter axialer Anschlag
- 226: Beleuchtungseinrichtung
- 228: Symbol

- 310: Drehschalter
- 312: elektronische Parkbremsvorrichtung
- 314: Drehknopf
- 316: Drehknopfgegenstück
- 318: erster rotatorischer Anschlag
- 320: zweiter rotatorischer Anschlag
- 322: erster axialer Anschlag
- 324: zweiter axialer Anschlag
- 326: Beleuchtungseinrichtung
- 328: Symbol

- D: Drehachse
- L: Leitung
- DR1: erste Drehrichtung
- DR2: zweite Drehrichtung
- VR1: erste axiale Verschiebungsrichtung
- VR2: zweite axiale Verschiebungsrichtung
- S2P: Betätigungsschaltzustand
- S2D: Löseschaltzustand
- TT: Trailertestschaltzustand
- STR: Streckbremsschaltzustand
- GRA: gradueller Schaltzustand
- RAP: radiale Ausgangsposition
- AAP: axiale Ausgangsposition
- 1D: Drehachse
- 1L: Leitung
- 1DR1: erste Drehrichtung
- 1DR2: zweite Drehrichtung
- 1VR1: erste axiale Verschiebungsrichtung
- 1VR2: zweite axiale Verschiebungsrichtung
- 1S2P: Betätigungsschaltzustand

- 1S2D: Löseschaltzustand
- 1TT: Trailertestschaltzustand
- 1STR: Streckbremsschaltzustand
- 1GRA: gradueller Schaltzustand
- 1RAP: radiale Ausgangsposition
- 1AAP: axiale Ausgangsposition

- 2D: Drehachse
- 2L: Leitung
- 2DR1: erste Drehrichtung
- 2DR2: zweite Drehrichtung
- 2VR1: erste axiale Verschiebungsrichtung
- 2VR2: zweite axiale Verschiebungsrichtung
- 2S2P: Betätigungsschaltzustand
- 2S2D: Löseschaltzustand
- 2TT: Trailertestschaltzustand
- 2STR: Streckbremsschaltzustand
- 2GRA: gradueller Schaltzustand
- 2RAP: radiale Ausgangsposition
- 2AAP: axiale Ausgangsposition

- 3D: Drehachse
- 3L: Leitung
- 3DR1: erste Drehrichtung
- 3DR2: zweite Drehrichtung
- 3VR1: erste axiale Verschiebungsrichtung
- 3VR2: zweite axiale Verschiebungsrichtung
- 3S2P: Betätigungsschaltzustand
- 3S2D: Löseschaltzustand
- 3TT: Trailertestschaltzustand
- 3STR: Streckbremsschaltzustand
- 3GRA: gradueller Schaltzustand
- 3RAP: radiale Ausgangsposition
- 3AAP: axiale Ausgangsposition

## Patentansprüche

1. Drehschalter (110) zum Steuern einer, insbesondere elektronischen, Parkbremsvorrichtung eines Fahrzeugs, insbesondere eines Nutzfahrzeugs, mit einem Drehknopf (114) und einem Drehknopfgegenstück (116), wobei
der Drehknopf (114) und das Drehknopfgegenstück (116) drehbar miteinander verbunden sind und um eine gemeinsame Drehachse relativ zueinander verdrehbar sind, und wobei
der Drehknopf (114) zusätzlich entlang der gemeinsamen Drehachse bezogen auf das Drehknopfgegenstück (116) axial verschiebbar ist, wobei
der Drehschalter (110) wenigstens einen Betätigungsschaltzustand (1S2P) und wenigstens einen Löseschaltzustand (1S2D) aufweist, wobei der Betätigungsschaltzustand (1S2P) einem Betätigen und der Löseschaltzustand (1S2D) einem Lösen der Parkbremsvorrichtung zugeordnet ist; wobei
der Betätigungsschaltzustand (1S2P) aus einer ersten Drehbewegung des Drehknopfes (114) in eine erste Drehrichtung (1DR1) und/oder aus einer ersten axialen Verschiebungsbewegung des Drehknopfes (114) in eine erste Verschiebungsrichtung (1VR1) jeweils bezogen auf das Drehknopfgegenstück (116) resultiert und wobei der Löseschaltzustand (1S2D) aus einer zweiten Drehbewegung des Drehknopfs (114) in eine zweite Drehrichtung (1DR2) und/oder aus einer zweiten axialen Verschiebungsbewegung des Drehknopfes (114) in die erste Verschiebungsrichtung (1VR1) jeweils bezogen auf das Drehknopfgegenstück (116) resultiert, wobei die erste Drehrichtung (1DR1) der zweiten Drehrichtung (1DR2) entgegengesetzt ist; wobei
der Drehschalter (110) wenigstens einen ersten axialen Anschlag (122), wenigstens einen zweiten axialen Anschlag (124) und wenigstens eine axiale Ausgangsposition (1AAP) aufweist, wobei der Drehknopf (114) an dem ersten axialen Anschlag (122) näher zu dem Drehknopfgegenstück (116) beabstandet ist als an dem zweiten axialen Anschlag (124);
**dadurch gekennzeichnet, dass**
der Betätigungsschaltzustand (1S2P) aus der ersten axialen Verschiebungsbewegung des Drehknopfes (114) in die erste Verschiebungsrichtung (1VR1) ausgehend von der axialen Ausgangsposition (1AAP) bis an den ersten axialen Anschlag (122) resultiert und wobei der Löseschaltzustand (1S2D) aus der zweiten axialen Verschiebungsbewegung des Drehknopfes (114) in die erste Verschiebungsrichtung (1VR1) ausgehend von der axialen Ausgangsposition (1AAP) bis an den ersten axialen Anschlag (122) resultiert.

2. Drehschalter (110) nach Anspruch 1,
**dadurch gekennzeichnet, dass**
der Drehschalter (110) wenigstens einen Trailertestschaltzustand (1TT) aufweist, der einer Trailertestfunktion der Parkbremsvorrichtung zugeordnet ist.

3. Drehschalter (110) nach Anspruch 1 oder Anspruch 2,
**dadurch gekennzeichnet, dass**
der Drehschalter (110) zusätzlich zum Steuern einer, insbesondere elektronischen, Betriebsbremsvorrichtung des Fahrzeugs eingerichtet ist, wobei der Drehschalter (110) wenigstens einen Streckbremsschaltzustand (1STR) aufweist, der einer Streckbremsfunktion der Betriebsbremsvorrichtung zugeordnet ist.

4. Drehschalter (110) nach einem der vorhergehenden Ansprüche,
**dadurch gekennzeichnet, dass**
der Drehschalter (110) wenigstens einen graduellen Schaltzustand (1GRA) aufweist, der einem graduellen Betätigen der Parkbremsvorrichtung zugeordnet ist.

5. Drehschalter (110) nach einem der vorhergehenden Ansprüche,
**dadurch gekennzeichnet, dass**
der Drehschalter (110) wenigstens einen ersten rotatorischen Anschlag (118), wenigstens einen zweiten rotatorischen Anschlag (120) und wenigstens eine rotatorische Ausgangsposition (1RAP) aufweist, wobei der erste rotatorische Anschlag (118), der zweite rotatorische Anschlag (120) sowie die rotatorische Ausgangsposition (1RAP) entlang eines kreisförmigen Bahnkurvenabschnitts angeordnet sind und wobei die rotatorische Ausgangsposition (1RAP) zwischen dem ersten und dem zweiten rotatorischem Anschlag (118, 120) angeordnet ist.

6. Drehschalter (110) nach Anspruch 5,
**dadurch gekennzeichnet, dass**
der Drehknopf (114) an dem ersten rotatorischen Anschlag (118) oder an dem zweiten rotatorischem Anschlag (120) oder an einer beliebigen Dreh-Position zwischen erstem rotatorischem (118) und zweitem rotatorischem Anschlag (120) ungleich der rotatorischen Ausgangsposition (1RAP) mittels wenigstens eines Drehfederelements in die rotatorische Ausgangsposition (1RAP) rückstellbar ist.

7. Drehschalter (110) nach einem der vorhergehenden Ansprüche,
**dadurch gekennzeichnet, dass**
der Drehknopf (114) an dem ersten axialen Anschlag (122) oder an einer beliebigen Position zwischen erstem axialen (122) und zweitem axialen Anschlag (124) mittels wenigstens eines Linearfederelements an den zweiten axialen Anschlag (124) rückstellbar ist, wobei die axiale Ausgangsposition (1AAP) am zweiten axialen Anschlag (124) angeordnet ist.

8. Drehschalter (110) nach Anspruch 2 und 5, sowie optional einem weiteren der vorhergehenden Ansprüche,
**dadurch gekennzeichnet, dass**
der Trailertestschaltzustand (1TT) aus einer dritten Drehbewegung des Drehknopfes (114) ausgehend von seiner rotatorischen Ausgangsposition (1RAP) in die zweite Drehrichtung (1DR2) bis an den zweiten rotatorischem Anschlag (120) resultiert, falls der Drehknopf (114) an dem zweiten axialen Anschlag (124) angeordnet ist und falls sich der Drehschalter (110) im Betätigungsschaltzustand (1S2P) befindet.

9. Drehschalter (110) nach Anspruch 4 und 5, sowie optional einem weiteren der vorhergehenden Ansprüche,
**dadurch gekennzeichnet, dass**
der graduelle Schaltzustand (1GRA) aus einer vierten Drehbewegung des Drehknopfes (114) ausgehend von seiner rotatorischen Ausgangsposition (1RAP) in die zweite Drehrichtung (1DR2) bis an den zweiten rotatorischen Anschlag (120) resultiert, falls der Drehknopf (114) an dem zweiten axialen Anschlag (124) angeordnet ist und falls sich der Drehschalter (110) im Löseschaltzustand (1S2D) befindet.

10. Drehschalter (110) nach Anspruch 3 sowie optional einem weiteren der vorhergehenden Ansprüche,
**dadurch gekennzeichnet, dass**
die Streckbremsfunktion in Abhängigkeit der jeweiligen Drehbewegung des Drehknopfs (114) proportional steuerbar ist.

11. Drehschalter (110) nach einem der vorhergehenden Ansprüche,
**dadurch gekennzeichnet, dass**
wenigstens ein Schaltzustand des Drehschalters (110) in Abhängigkeit wenigstens eines weiteren Schaltzustands einer Betätigungseinrichtung, insbesondere eines Fußpedals, der Betriebsbremsvorrichtung des Fahrzeugs einnehmbar ist.

12. Drehschalter (110) nach einem der vorhergehenden Ansprüche,
**dadurch gekennzeichnet, dass**
der Drehschalter (110) wenigstens eine Beleuchtungseinrichtung und wenigstens ein Symbol umfasst, die den jeweiligen Schaltzustand des Drehschalters (114) und den jeweiligen Betriebszustand der Parkbremsvorrichtung und/oder der Betriebsbremsvorrichtung anzeigen.

## Claims

1. A rotary switch (110) for controlling an, in particular electronic, parking brake device of a vehicle, in particular a utility vehicle, having a rotary knob (114) and a rotary-knob counterpart (116),
the rotary knob (114) and the rotary-knob counterpart (116) being rotatably connected to one another and rotatable in relation to one another about a common axis of rotation,
the rotary knob (114) additionally being axially displaceable along the common axis of rotation in relation to the rotary-knob counterpart (116),
the rotary switch (110) having at least one actuation switching state (1S2P) and at least one release switching state (1S2D),
the actuation switching state (1S2P) being assigned to the actuation of the parking brake device and the release switching state (1S2D) being assigned to the releasing of the parking brake device;
the actuation switching state (1S2P) being the result of a first rotational movement of the rotary knob (114) in a first direction of rotation (1DR1) and/or of a first axial displacement movement of the rotary knob (114) in a first direction of displacement (1VR1), in each case in relation to the rotary-knob counterpart (116), and the release switching state (1S2D) being the result of a second rotational movement of the rotary knob (114) in a second direction of rotation (1DR2) and/or of a second axial displacement movement of the rotary knob (114) in the first direction of displacement (1VR1), in each case in relation to the rotary-knob counterpart (116), the first direction of rotation (1DR1) being opposite to the second direction of rotation (1DR2),
the rotary switch (110) having at least one first axial stop (122), at least one second axial stop (124) and at least one initial axial position (1AAP), the rotary knob (114) being located closer to the rotary-knob counterpart (116) at the first axial stop (122) than at the second axial stop (124);
**characterised in that**
the actuation switching state (1S2P) is the result of the first axial displacement movement of the rotary knob (114) in the first direction of displacement (1VR1) starting from the initial axial position (1AAP) and finishing at the first axial stop (122),
and that the release switching state (1S2D) is the result of the second axial displacement movement of the rotary knob (114) in the first direction of displacement (1VR1) starting from the axial starting position (1AAP) and finishing at the first axial stop (122).

2. A rotary switch (110) according to claim 1,
**characterised in that**
the rotary switch (110) has at least one trailer test switching state (1TT) that is assigned to a trailer test function of the parking brake device.

3. A rotary switch (110) according to claim 1 or claim 2,
**characterised in that**
the rotary switch (110) is additionally configured for controlling an, in particular electronic, service-brake device of the vehicle, the rotary switch (110) having at least one anti-jackknife-braking switching state (1STR) that is assigned ,to an anti-jackknife braking function of the service-brake device.

4. A rotary switch (110) according to any one of the preceding claims, **characterised in that**
the rotary switch (110) has at least one gradual switching state (1GRA) that is assigned to the gradual actuation of the parking brake device.

5. A rotary switch (110) according to any one of the preceding claims, **characterised in that**
the rotary switch (110) has at least one first rotational stop (118), at least one second rotational stop (120) and at least one initial rotational position (1 RAP), the first rotational stop (118), the second rotational stop (120) and the initial rotational position (1RAP) being arranged along a circular trajectory portion and the initial rotational position (1RAP) being arranged between the first and second rotational stops (118; 120).

6. A rotary switch (110) according to claim 5,
**characterised in that**
the rotary knob (114) can be restored to the initial rotational position (1RAP) at the first rotational stop (118) or at the second rotational stop (120) or at any rotational position between the first rotational stop (118) and the second rotational stop (120) other than the initial rotational position (1RAP) by means of at least one rotary spring element.

7. A rotary switch (110) according to any one of the preceding claims, **characterised in that**
the rotary knob (114) can be restored to the second axial stop at the first axial stop (122) or at any position between the first axial stop (122) and the second axial stop (124) by means of at least one linear spring element, the initial axial position (1AAP) being arranged at the second axial stop (124).

8. A rotary switch (110) according to claims 2 and 5 and optionally according to another of the preceding claims,
**characterised in that**
the trailer test switching state (1TT) is the result of a third rotational movement of the rotary knob (114) in the second direction of rotation (1DR2) starting from its initial rotational position (1RAP) and finishing at the second rotational stop (120) if the rotary knob (114) is arranged at the second axial stop (124) and if the rotary switch (110) is in the actuation switching state (1S2P).

9. A rotary switch (110) according to claims 4 and 5 and optionally according to another of the preceding claims,
**characterised in that**
the gradual switching state (1GRA) is the result of a fourth rotational movement of the rotary knob (114) in the second direction of rotation (1DR2) starting from its initial rotational position (1RAP) and finishing at the second rotational stop (120) if the rotary knob (114) is arranged at the second axial stop (124) and if the rotary switch (110) is in the release switching potion (1SDD).

10. A rotary switch (110) according to claim 3 and optionally according to another of the preceding claims,
**characterised in that**
the anti-jackknife braking function can be controlled proportionally dependent on the rotational movement of the rotary knob (114).

11. A rotary switch (110) according to any one of the preceding claims, **characterised in that**
at least one switching state of the rotary switch (110) can be assumed dependent on at least one further switching state of an actuating device, in particular a foot pedal, of the service-brake device of the vehicle.

12. A rotary switch (110) according to any one of the preceding claims, **characterised in that**
the rotary switch (110) comprises at least one light device and at least one symbol that indicate the switching state of the rotary knob (114) and the operating state of the parking brake device and/or the service-brake device.

## Revendications

1. Interrupteur (110) rotatif, pour commander un dispositif, notamment électronique, de frein de stationnement d'un véhicule, notamment d'un véhicule utilitaire, comprenant un bouton (114) tournant et une pièce (116) antagoniste du bouton tournant, dans lequel
le bouton (114) tournant et la pièce (116) antagoniste du bouton tournant sont reliés ensemble, de manière à pouvoir tourner et peuvent tourner l'une par rapport à l'autre autour d'un axe de rotation commun, et dans lequel
le bouton (114) tournant peut supplémentairement coulisser axialement, rapporté à la pièce (116) antagoniste du bouton tournant, le long de l'axe de rotation commun, dans lequel
l'interrupteur (110) tournant a au moins un état (1S2P) de commutation d'actionnement et au moins un état (1S2D) de commutation de desserrement, dans lequel
l'état (1S2P) de commutation d'actionnement est associé à un actionnement et l'état (1S2D) de desserrage à un desserrage du dispositif de frein de stationnement ; dans lequel
l'état (1S2P) de commutation d'actionnement provient d'un premier mouvement de rotation du bouton (114) tournant dans un premier sens (1DR1) de rotation et/ou d'un premier mouvement de coulissement axial du bouton (114) de rotation dans un premier sens (1VR1) de coulissement, rapporté respectivement à la pièce (116) antagoniste du bouton tournant, et dans lequel l'état (1S2D) de commutation de desserrage provient d'un deuxième mouvement de rotation du bouton (114) tournant dans un second sens (1DR2) de rotation et/ou d'un deuxième mouvement de coulissement axial du bouton (114) tournant dans le premier sens (1VR1) de coulissement, rapporté respectivement à la pièce (116) antagoniste du bouton tournant, dans lequel le premier sens (1DR1) de rotation est contraire au deuxième sens (1DR2) de rotation ; dans lequel
l'interrupteur (110) tournant a au moins une première butée (122) axiale, au moins une deuxième butée (124) axiale et au moins une position (1AAP) axiale initiale, dans lequel le bouton (114) tournant est, à la première butée (122) axiale, plus près de la pièce (116) antagoniste du bouton tournant qu'à la deuxième butée (124) axiale ;
**caractérisé en ce que**
l'état (1S2P) de commutation d'actionnement provient du premier mouvement de coulissement axial du bouton (114) tournant dans le premier sens (1VR1) de coulissement, à partir de la position (1AAP) axiale initiale jusqu'à la première butée (122) axiale, et dans lequel l'état (1S2D) de commutation de desserrage provient du deuxième mouvement de coulissement axial du bouton (114) tournant dans le premier sens (1VR1) de coulissement, à partir de la position (1AAP) axiale initiale jusqu'à la première butée (122) axiale.

2. Interrupteur (110) tournant suivant la revendication 1, **caractérisé en ce que**
l'interrupteur (110) tournant a au moins un état (1TT) de commutation de test de remorque, qui est associé à une fonction de test de remorque du dispositif de frein de stationnement.

3. Interrupteur (110) tournant suivant la revendication 1 ou revendication 2,
**caractérisé en ce que**
l'interrupteur (110) tournant est conçu en outre pour la commande d'un dispositif, notamment électronique, de frein de service du véhicule, dans lequel l'interrupteur (110) tournant a au moins un état (1STR) de commutation de frein de maintien en ligne, qui est associé à une fonction de frein de maintien en ligne du dispositif de frein de service.

4. Interrupteur (110) tournant suivant l'une des revendications précédentes,
**caractérisé en ce que**
l'interrupteur (110) tournant a au moins un état (1GRA) de commutation graduelle, qui est associé à une actionnement graduel du dispositif de frein de stationnement.

5. Interrupteur (110) tournant suivant l'une des revendications précédentes,
**caractérisé en ce que**
l'interrupteur (110) tournant a au moins une première butée (118) de rotation, au moins une deuxième butée (120) de rotation et au moins une position (1RAP) de rotation initiale, dans lequel la première butée (118) de rotation, la deuxième butée (120) de rotation ainsi que la position (1RAP) de rotation initiale sont disposées le long d'une partie de trajectoire circulaire, et dans lequel la position (1RAP) de rotation initiale est disposée entre la première et la deuxième butée (118, 120) de rotation.

6. Interrupteur (110) tournant suivant la revendication 5, **caractérisé en ce que**
le bouton (114) tournant, à la première butée (118) de rotation ou à la deuxième butée (120) de rotation ou à une position en rotation quelconque entre la première butée (118) de rotation et la deuxième butée (120) de rotation différente de la position (1RAP) en rotation initiale, peut être rappelé dans la position (1RAP) en rotation initiale au moyen d'un élément de ressort de torsion.

7. Interrupteur (110) tournant suivant l'une des revendications précédentes,
**caractérisé en ce que**
le bouton (114) tournant, à la première butée (122) axiale ou à une position quelconque entre la première butée (122) axiale et la deuxième butée (124) axiale, peut, au moyen d'un élément de ressort linéaire, être rappelé à la deuxième butée (124) axiale, la position (1AAP) axiale initiale étant disposée à la deuxième butée (124) axiale.

8. Interrupteur (110) tournant suivant la revendication 2 et 5 ainsi qu'éventuellement suivant une autre des revendications précédentes,
**caractérisé en ce que**
l'état (1TT) de commutation de test de remorque provient d'un troisième mouvement en rotation du bouton (114) tournant, à partir de sa position (1RAP) en rotation initiale dans le deuxième sens (1DR2) de rotation jusqu'à la deuxième butée (120) de rotation, si le bouton (114) tournant est disposé à la deuxième butée (124) axiale et si l'interrupteur (110) tournant se trouve dans l'état (1S2P) de commutation d'actionnement.

9. Interrupteur (110) tournant suivant la revendication 4 et 5 ainsi qu'éventuellement suivant une autre des revendications précédentes,
**caractérisé en ce que**
l'état (1GRA) de commutation graduelle provient d'un quatrième mouvement de rotation du bouton (114) tournant, à partir de sa position (1RAP) en rotation initiale dans le deuxième sens (1DR2) de rotation jusqu'à la deuxième butée (120) de rotation, si le bouton (114) tournant est disposé à la deuxième butée (124) axiale et si l'interrupteur (110) tournant se trouve dans l'état (1S2D) de commutation de desserrage.

10. Interrupteur (110) tournant suivant la revendication 3 ainsi qu'éventuellement suivant une autre des revendications précédentes,
**caractérisé en ce que**
la fonction de frein de maintien en ligne peut être commandée proportionnellement en fonction du mouvement de rotation respectif du bouton (114) tournant.

11. Interrupteur (110) tournant suivant l'une des revendications précédentes,
**caractérisé en ce qu'**
au moins un état de commutation de l'interrupteur (110) peut être pris en fonction d'au moins un autre état de commutation d'un dispositif d'actionnement, notamment d'une pédale au pied, du dispositif de frein de service du véhicule.

12. Interrupteur (110) tournant suivant l'une des revendications précédentes,
**caractérisé en ce que**
l'interrupteur (110) tournant comprend au moins un dispositif d'éclairage et au moins un symbole, qui indique l'état de commutation respective de l'interrupteur (114) tournant et l'état de fonctionnement respectif du dispositif de frein de stationnement et/ou du dispositif de frein de service.
